# EUROPEAN PATENT APPLICATION

(11) **EP 4 704 381 A1**
(43) Date of publication of application: **04.03.2026**
(21) Application number: 24306402.9
(22) Date of filing: 27.08.2024
(51) Int. Cl.: H04L 9/40, H04W 12/06, H04W 12/069, H04W 12/61

(54) **METHOD FOR SENDING A CURRENT DATE FROM A SERVER TO A CLIENT OF A TELECOMMUNICATION DEVICE, CORRESPONDING SECURE ELEMENT AND SERVER**

(71) Applicant: THALES DIS FRANCE SAS, 92190 Meudon (FR)
(72) Inventor: REGNAULT, Nicolas, 13600 LA CIOTAT (FR); BOUZAYANE, Oussama, 158747 SINGAPORE (SG); DANY, Vincent, 13400 AUBAGNE (FR)
(74) Representative: Scheer, Luc

(57) **Abstract**

The invention concerns a method for sending a current date from a server 11 to a client 10 of a telecommunication device, the method comprising:
- during a TLS handshake procedure between the client 10 and the server 11, sending from the server 11 to the client 10 a Session Ticket, after mutual authentication between the client 10 and the server 11, the Session Ticket comprising an encrypted current date;
- during a next handshake procedure between the client 10 and the server 11, performed during a resumption phase, using by the client 10 the current date for verifying by the client 10 the validity of the server's 11 certificates.

## Description

The invention concerns telecommunication and in particular a client to server communication for providing to the client an accurate current date of the server.

In a specific context of the invention, a client is a secure element, like a SIM card, a UICC (Universal Integrated Circuit Card), a eUICC (embedded UICC) or an iUICC (integrated UICC), cooperating (i.e. communicating with or comprised in) a telecommunication terminal.

This terminal can be a smartphone, a tablet, a PDA or a computer for example.

But the invention is not limited to these elements.

It is known that a secure element doesn't have capability to maintain an accurate date, because of its lack of power in loT devices for example.

Secure elements often implement TLS for authentication with a server before exchanging data, for example for authentication on slices. And in such authentication the secure element needs to validate the server certificates validity. The certificates are often chained:
There are two types of certificate authorities (CAs): root CAs and intermediate CAs. For a TLS certificate to be trusted, that certificate must have been issued by a CA that's included in the trusted store of the device that is trying to connect.

If the certificate wasn't issued by a trusted CA, the connecting device (eg. a web browser) checks to see if the certificate of the issuing CA was issued by a trusted CA. It continues checking until either a trusted CA is found (at which point a trusted, secure connection will be established), or no trusted CA can be found (at which point the device will usually display an error).

The list of SSL certificates, from the root certificate to the end-user certificate, represents the TLS certificate chain.

Each certificate has an expiration date. Certificates date can be for example of the form, for two certificates:
UTCTime '230304030412Z'
UTCTime '230226030412Z'

The client (secure element) verifies that the certificate(s) of the server to which it is connecting are still valid, i.e. that it's certificate has not expired (validity period expired).

Thus, it is necessary that the secure element knows a trusted approximative precise date (at least the current day - a certificate having a validity period indicated by a year, a month, a day, minutes and seconds) at which the certificate(s) of the server has expired.

One known solution would be to rely on the device date (thanks to a PLI proactive command - Provide Local Information). But this date is not trustable because this date is configured by the end user on his terminal.

Another solution is to retrieve the date from a NTP server (Network Time Protocol server). The inconvenience of this solution is that it generates extra communication which generates power consumption and delays the TLS session.

The present invention proposes a solution to these problems.

More precisely, the invention proposes a method according to claims 1 to 3, a secure element according to claim 4 and a server according to claim 5.

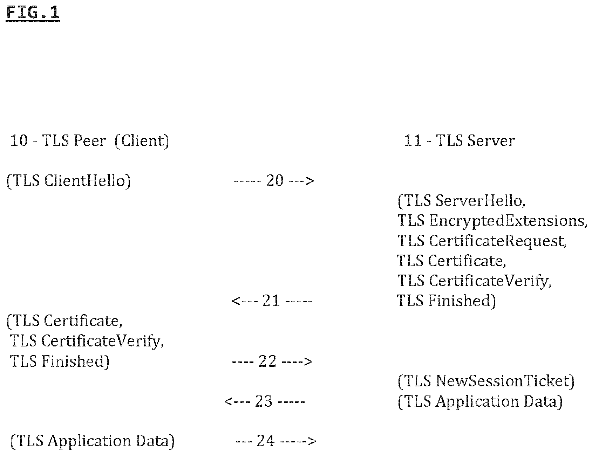

Other features and advantages of the invention will be described below in view of the unique figure that represents an TLS 1.3 handshake like defined in RFC 8446.

A TLS session involves multiple steps, as the client and server exchange the information necessary for completing the handshake and making further conversation possible.

A TLS session is divided in two phases: The handshake and the data exchange. During the handshake, the client and the server negotiate the security parameters and the keys that will be used to secure the data exchanges that will happen later on.

The TLS 1.3 (RFC 8446) is the Internet Engineering Task Force's (IETF^{®}) latest version of the Secure Socket Layer (SSL) protocol. TLS provides a way to use certificates for both user and server authentication and for dynamic session key generation.

The TLS conversation begins at step 20 with the peer 10 is sending a TLS ClientHello handshake message.

The TLS server 11, then, at step 21 responds with TLS server records such as a ServerHello handshake message, TLS encrypted extensions, TLS certificate request, TLS certificate, TLS certificate verify and TLS Finished.

The TLS client 10 must respond to the server one or more TLS client records containing a TLS certificate, TLS certificate verify and TLS Finished message.

If the TLS server 11 authenticates successfully (step 23) and sends a TLS NewSessionticket to allow a TLS resumption at next TLS authentication.

The full TLS handshake requires to transmit and to verify the server certificate chain on the client and the client certificate chain on the server, which both imposes a serious performance penalty on all applications that require secure communication. To help mitigate some of the costs, TLS Session Resumption provides a mechanism to resume or share the same negotiated secret key data between multiple connections. The abbreviated handshake eliminates a full roundtrip of latency and significantly reduces computational costs for both sides. TLS Session Resumption can be implemented with session identifiers and session tickets mechanisms. With TLS1.3, both methods (session identifiers and session tickets) use the NewSessionTicket. With session identifiers, the server 11 assigns a random session ID during the initial handshake with the client 10. Server 11 sends the session ID to client 10 in the NewSessionTicket. Server 11 stores this session ID along with the session keys and connection states. To resume a session, the client 10 sends the stored session ID with the first protocol message (ClientHello) in the identity field to the server 11. If the server 11 recognizes the connection and is willing to resume the session, it replies with the same session ID to re-establish the respective session. This allows a secure connection to be established quickly and with no loss of security since the previously negotiated session data are reused.

The second method removes the requirement for the server 11 to keep the per-client session state. Instead, if the client 10 indicates that it supports session tickets, the server 11 can include a session ticket record, which includes all of the negotiated session data encrypted with a secret key known only by the server 11.

This session ticket is then stored by the client 10 and can be included in the handshake message of a subsequent session based on the resumption phase. Thus, all session data is stored only on the client 10, but the ticket is still safe because it is encrypted with a key known only by the server 11.

The session ticket mechanism is thus referred to as the stateless resumption mechanism. The main improvement of stateless resumption is the removal of the server-side session cache, which simplifies deployment by requiring that the client 10 provides the session ticket on every new connection to the server until the ticket has expired.

Thus, session resumption is a feature that allows a client and a server to reuse the cryptographic parameters of a previous TLS session, without having to perform a full handshake again and without having to exchange and verify certificate chains

In order to indicate the current date to the client 10, the server 11 includes in the NewSessionTicket a field comprising an encrypted current date.

This date can be considered as trusted and accurate by the client 10 since it is sent by the server 11 after a mutual authentication between the client 10 and the server 11.

Later on, during a next handshake procedure between the client 10 and the server 11, performed during a resumption phase, the client 10 uses this current date previously received for verifying the validity of the server's certificates.

Of course, the precision of the date depends on the frequency at which the server 11 sends a date to the client 10: If this frequency is for example each day, the precision of the date is one day - the client will use the previously received date (1 day before) to check the validity of the certificates of the server 11. But since certificates have in general a long validity period (some years), this has no consequent impact on the validity check.

It has to be noted that the proposed invention is fully interoperable since if the client 10 does not recognize that a date field is present in the NewSessionTicket, it will simply ignore it (a NewSessionTicket is a full opaque ticket for the client 10 that only stores the NewSessionTicket for later on sending it to the server 11 during the session resumption phase).

The NewSessionTicket comprises preferably an indicator advising the client 10 that the NewSessionTicket comprises a field comprising an encrypted current date.

The date is encrypted with a working key derived from a shared secret. This shared secret is itself derived from the master secret as output of the TLS handshake.

The decrypted data will first contain a defined pattern allowing the client 10 to confirm that what it decrypted is well a date (In order to maintain interoperability with servers which don't implement this feature).

In this regard, a client that does not implement this feature will consider the full ticket as opaque and will not be affected by this extra feature (In order to maintain interoperability with secure elements that do not implement this feature).

The advantages of the invention is that the client 10 obtains an approximatively accurate current date providing a first level of certificate validity validation. No extra data traffic is necessary and the interoperability with server and client which do not support the feature is maintained.

The proposed solution can also be used for non--powered devices, for example for a TLS exchange between an electronic passport and a reader. The chip of the passport can then store the PSK keys and the date provided by the reader.

## Claims

1. Method for sending a current date from a server (11) to a client (10) of a telecommunication device, said method comprising:
- during a TLS handshake procedure between said client (10) and said server (11), sending from said server (11) to said client (10) a Session Ticket, after mutual authentication between said client (10) and said server (11), said Session Ticket comprising an encrypted current date;
- during a next handshake procedure between said client (10) and said server (11), performed during a resumption phase, using by said client (10) said current date for verifying by said client (10) the validity of said server (11)'s certificates.

2. Method according to claim 1, wherein said client (10) is a secure element being one of:
- a UICC, or
- an eUICC, or
- an iUICC.

3. Method according to claim 1 or 2, wherein said Session Ticket comprises an indicator advising said client (10) that said Session Ticket comprises a field comprising said encrypted current date.

4. Secure element cooperating with a telecommunication terminal, said secure element being configured for:
- during a TLS handshake procedure between said secure element and a server (11), after mutual authentication between said secure element and said server (11), retrieving from a Session Ticket sent by said server (11) to said secure element an encrypted current date;
- during a next handshake procedure between said client (10) and said server (11), performed during a resumption phase, using by said client (10) said current date for verifying by said client (10) the validity of said server (11)'s certificates.

5. A server (11) for sending a current date to a client (10) of a telecommunication device, said server (11) being configured for:
- during a TLS handshake procedure between said client (10) and said server (11), sending from said server (11) to said client (10) a Session Ticket, after mutual authentication between said client (10) and said server (11), said Session Ticket comprising an encrypted current date.
